# EUROPEAN PATENT SPECIFICATION

(11) **EP 0 587 660 B1**
(45) Date of publication and mention of the grant of the patent: **16.10.1996**
(21) Application number: 92911407.2
(22) Date of filing: 27.05.1992
(51) Int. Cl.: F16L 9/12

(54) **LAMINATED PIPE AND A PROCESS FOR MAKING THE SAME**
MEHRSCHICHTIGES ROHR UND VERFAHREN ZU SEINER HERSTELLUNG
TUYAU STRATIFIE ET PROCEDE DE FABRICATION

(30) Priority: 31.05.1991 NO 912103
(43) Date of publication of application: 23.03.1994
(73) Proprietor: Compipe A/S, 4001 Stavanger (NO)
(72) Inventor: AANONSEN, Torbjorn, N-0172 Oslo (NO); ESPEDALEN, Jorgen, N-4120 Tau (NO)
(74) Representative: Delmar, John-Ake
(86) International application number: NO9200097
(87) International publication number: WO9221908

(56) References cited:
- GB-A- 1 229 938
- GB-A- 1 485 688
- GB-A- 2 077 880
- GB-A- 2 178 820
- US-A- 1 358 633

## Description

The present invention is related to a method for making a laminated pipe and a laminated pipe produced by this method and more specifically a laminated pipe for injection of chemicals into an underwater drilled well connected between a host oil platform and an underwater satellite station. The laminated pipe can also be used for hydraulic regulation of valves in satellite stations. The laminated pipe can be operated with high pressures, it is resistant against chemicals and can be spooled onto a drum.

A production platform surrounded by several oilwells at a distance from the production platform is often used during oilproduction offshore. During the past few years a special method for oilproduction from deepsea oilwells has been developed, where each well has an underwater satellite station with the required production facilities as valves etc. These satellites are connected by piping to the host platform where the controlling and production of the oilwells are conducted.

By well drilling and oil production offshore, it is necessary to inject chemicals to underwater installations and hydraulic fluids to valves etc., especially with hydraulic regulation of the wellhead Christmas tree. When a valve in the underwater installation is to be opened or closed, these actions must be performed during the shortest possible time for instance by blow outs.

If a blow out occurs at the wellhead, it will often take several minutes for the hydraulic signals to reach the wellhead because of long reponse time. This response time is a result of the fibres in the signal pipe being woven without matrics material outside the thermoplastic pipe. A result of this is that the stretch volume increases and thereby the response time will increase. The environmental consequence of the fact that it can take up to several minutes to close down a blow out under water can be very severe.

Known pipes as described supra is mainly steelpipes of different types and thermoplastic pipes with an outer loadbearing wound sheet of polymer fibres.

GB, A, 1 229 938 and GB, A, 1 485 688 describe a composite tube consisting of a thermoplastic inner tube coated with a fibre-reinforced resin material. From GB, A, 2 178 820 it is generally known to "pre-stress" a composite tube. According to this publication, it is the fibres that are stretched and not the thermoplastic tube itself.

These prior art pipes have several disadvantages. The steel pipes will corrode and the reinforced thermoplastic pipes have a too long response time when hydraulic signals are transmitted over long distances. The transported chemicals will also have a tendency to diffuse through the plastic material. Another disadvantage with the prior art pipes is that they are unspoolable, i.e. they must be installed in sections and consequently be joined. This will result in increased costs due to the required arrangements with pipe joining at large seadepths. Another disadvantage with prior art laminated pipes with an inner pipe of thermoplastic and an outer composite sheet of a reinforced thermoset resin is that the mechanical strength between the thermoplastic and the thermoset resin is too little. The reason for this is the difficult grafting of a thermoplastic to a thermoset resin.

One object according to the present invention is to provide a laminated pipe with significant lower response time than prior pipes, which pipes can be produced in infinite lengths. A result of this is that it is not required to join the pipes at other positions than at the connections between the pipes at other positions than at the connections between the pipe and the connection sites. In addition these laminated pipes will be more resistent to chemicals than corresponding steel pipes.

Another object is to provide a laminated pipe that can be spooled onto a drum and installed by a conventional cable laying vessel.

Still another object is to provide a method for production of a laminated pipe described supra which method results in grafting between the thermoplastic and the thermoset resin.

These objects are achieved according to the invention with a laminated pipe as claimed in claim 1 and with a method according to claim 2. The laminated pipe is produced in infinite lengths with continuous winding of the reinforcing fibres without winding these. Alternatively this pretreatment can comprise application of a ter-polymer by means of a cross-head extruder to obtain a chemical bond between the thermoplastic and the thermoset resins. The laminate pipe is produced in infinite lengths with continuous application of reinforcing fibres without winding these.

Fig. 1 is a sectional view of a laminated pipe according to the invention.

Fig. 2 is a flow sheet of a process for producing a laminated pipe according to the invention.

Fig. 3 is a sectional view of a connection device which may be used with a laminated pipe according to the invention.

Fig. 4 is an example of application of a laminated pipe according to the invention.

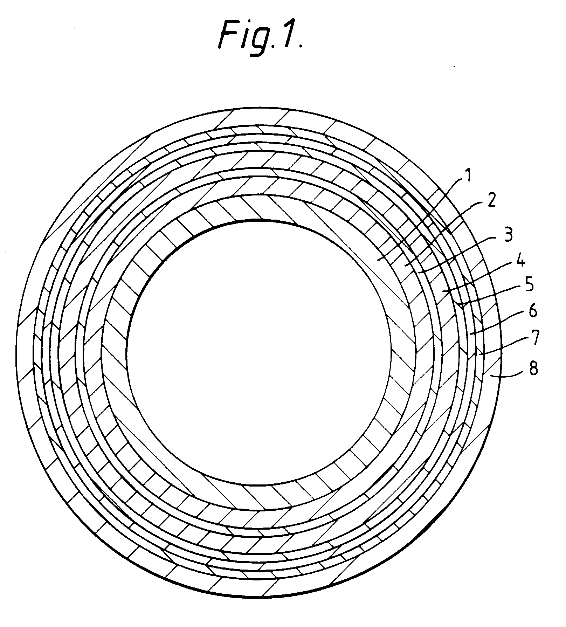

Figur 1 is a sectional view of a laminated pipe according to the invention. In the drawing the layers are shown with equal thickness, but this is because of illustrative purposes only. The laminated pipe according to fig. 1 comprises an inner thermoplastic liner 1, with a layer of longitudinal glassfibres 2, a multidirectional mat 3, a radial layer of glassfibres 4, a multidirectional mat 5, a longitudinal layer of glassfibres 6, a multidirectional mat 7 and a radial layer of glassfibres 8. All these layers are bonded together with a thermoset resin.

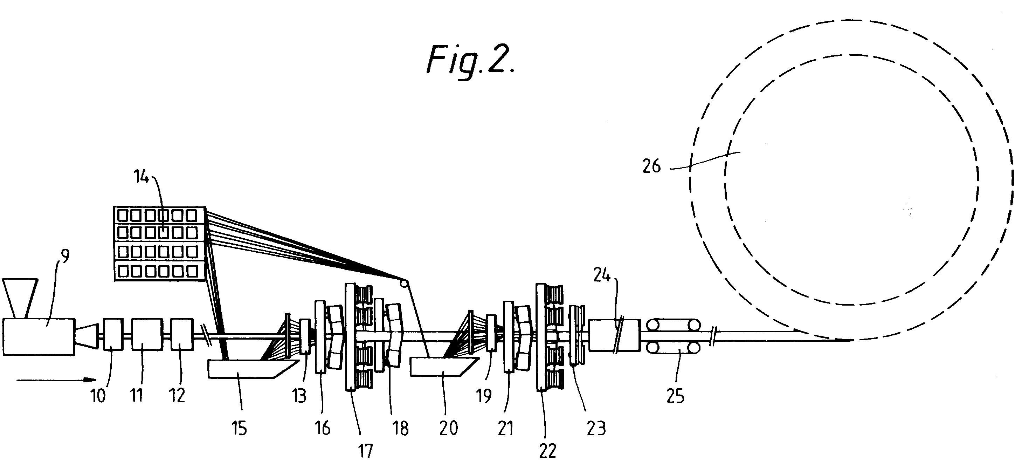

Figur 2 shows a method for producing a laminated pipe according to the invention. The thermoplastic liner is extruded 9 and applied a longitudinal stretch. This longitudinal stretch that extends the pipe corresponds to the thermoplastic pipes thermal expansion in longitudinal direction at curing temperature. The thermoplastic liner achieves frozen-in tensions in longitudinal direction. These thermal tensions will later be released during curing with a positive effect on the binding conditions between the thermoset resin and the thermoplastic. Subsequent to extrusion the thermoplastic liner will be stored or fed through a bufferstation (not shown) to the production process.

Immediately prior to the laminating process, the thermoplastic liner is subjected to a pre-treatment 10 consisting of washing the liner with a suitable degreasing composition such as acetone and subsequent rubbing 11 of the outer part of the liner with a rotating abrasive paper, such as a grade 40 abrasive paper. The liner is washed/rinsed at 12, e.g. with acetone, and fed to the production process. The thermoplastic liner does not come in contact with fat or contaminating materials during the abrasion/washing-process. This pre-treatment of the thermoplastic liner is shown at 10-12 in figur 2. An alternative to this pretreatment is application of a ter-polymer on the outer surface of the liner. The ter-polymer is applied with a crosshead extruder (not shown) and results in chemical bonding between thermoplastic thermoset resin.

The thermoplastic liner is now ready for laminate application, which laminates are applied at room temperature. The laminates are directly applied to the thermoplastic liner support and this eliminates the need for an interior mandrel that are used by conventional production of laminated pipes. Laminated pipes are usually produced by laminating/wrapping fibres onto a rotating mandrel. By the process according to the invention neither the thermoplastic liner nor the laminate rotates.

At first, one layer of fibres is applied directly onto the thermoplastic liner in longitudinal direction at 13. The glassfibres are fed from a magazine 14 with socalled callipers and subsequently through a bath 15 containing thermoset resin, where the fibrewires are impregnated. The glassfibre wires are placed in a side-by-side relation and cover the thermoplastic liner completely. Next a layer of multidirectional mat 16 is applied. Outside this mat 16 another layer of radial glassfibre is applied by means of a carrousel 17. Outside this layer another multidirectional mat 18, impregnated with thermoset resin, is applied. This mat 18 is a thin-felt-like glassfibre mat.

A layer of longitudinal glassfibres 19, impregnated with thermoset resin in a bath 20, is applied onto the mat 18.

Outside this axial layer 19, a multidirectional mat 21 is applied. Subsequently a final layer of radial glassfibres is applied by means of a rotating carrousel 22.

Finally two layers of cellofane tape 23 are wrapped over the laminate in order to prevent loss of thermoset resin and prevent oozing of laminate during the subsequent curing process.

The laminate pipe is fed into a curing oven where the epoxy is cured. The curing oven is a pipe that is externally insulated with mineral wool. Inside the oven there is mounted a V-shaped rail on which the laminated pipe is pulled by means of a belt-conveyer 25. The curing oven 24 has a fan and an heating element with a controller.

The length of the curing oven is determined according to curing time and production velocity. The laminated pipe is to be cured when it leaves the oven 24.

When the pipe has left-the oven 24, the cellofane tapes are washed away. The pipe is cooled and when it has reached ambient temperature, spooled onto a drum 26. Due to the fact that the pipe has flexibility, the drum 26 is motor driven.

A pulling wire is placed between the belts in the belt-conveyer and pulls the longitudinal fibres and the thermoplastic liner through the production process and into the curing oven 24. When the forward end of the- pipe leaves the curing oven 24, the distance between the rubber belts is increased and the conveyer 25 pulls the pipe itself.

The production of the laminated pipe is based on a continuous process. In principle the laminated pipe can be produced in infinite lengths, and it is possible to connect the pipes by known techniques if necessary. If a rupture should occur, the pipe can be connected with a steel connection after it is cured.

The thermoplastic pipe and the external loadbearing laminate achieve a mechanical and chemical binding through the production process. This binding will prevent separation of the thermoplastic liner and the laminate when the pipe is in operation. The mechanical binding between the thermoplastic liner and the laminate is achieved by the mechanical rubbing and surface rinsing with a degreasing composition prior to lamination and a chemical binding (grafting) between the thermoplastic liner and the curing substance in the thermoset resin. The heat produced in the curing oven will after some time be transferred from the laminate to the thermoplastic liner. Due to the curing temperature, the thermal tensions in the liner will be released and the liner will contract in longitudinal direction in a ratio corresponding to the extension of the pipe if it had not been subjected to tension during extrusion. The real extension of the thermoplastic liner in longitudinal direction is approximately zero. When the curable material starts to cure, the thermoplastic liner is stabilized and the thermoset resin will form mechanical and chemical bonds to the surface of the thermoplastic liner. When the laminated pipe leaves the curing oven, the temperature will decrease and the thermoset resin and the liner will contract. The thermal treatment reduces the frozen-in tensions in the thermoplastic liner. The result of the applied axial tension to the thermoplastic liner is that the liner will have a minor plastic deformation when the curing process is complete and the temperature has decreased to ambient temperature. This will give a better binding between the thermoplastic and the thermoset resin and the permanent shear stress will be minimized. Thereby the shear stress between thermoset resin and thermoplastic will decrease.

The laminated pipe is subjected to a number of different stress and load during production, transport, installation and operation. The composition of the composite laminate is based on the physical and environmental conditions that occur during production and the pipes lifetime.

Based on the presumed loads the laminated pipes are subjected to, the composition of the pipes can of course differ from the embodiments depicted in figs. 1 and 2. The number of layers and their directions can be varied.

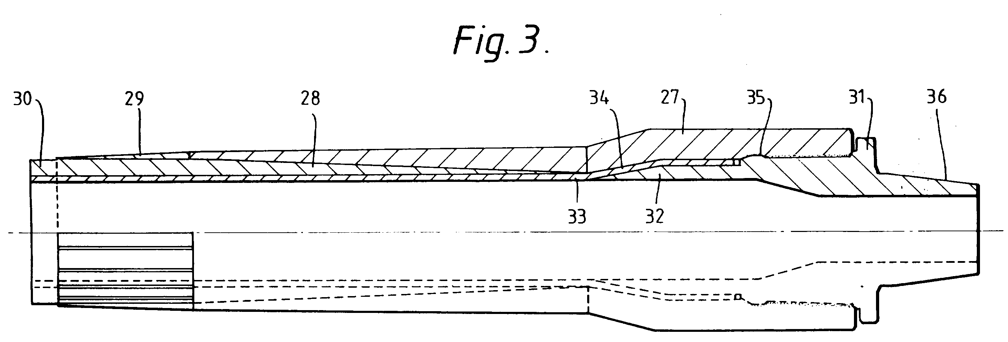

Fig. 3 shows a connection device comprising a steel pipe 27 with an inner cone 28 that is attached to a corresponding external cone 28 on the composite pipe. The steel pipe 27 has a slotted section 29 at the cone's 28 largest diameter, which section reduces the tensions at the intermediate section between the composite pipe 30 and the steel pipe 27 during operation. In the other end of the steel pipe, a pipe adapter 31 with a cone 32, which least diameter corresponds to the inner diameter of the thermoplastic liner, is pushed into the thermoplastic liner 33. This cone will force the thermoplastic liner outwards and it will be attached to the inner surface 34 of the steel pipe simultaneously like the laminated pipe. The pipe adapter 31 will replace the function of the thermoplastic pipe and in addition the adhesive and the laminate will not be exposed to the transported fluid. The pipe adapter 31 is connected to the inner surface of the steel pipe, which is threaded, where two conical surfaces abut and form a primary contact surface. The connection device can connect the laminated pipe to any other piping by suitable design of the other end of the pipe adapter. The adhesive can be a sand-containing thermoset resin.

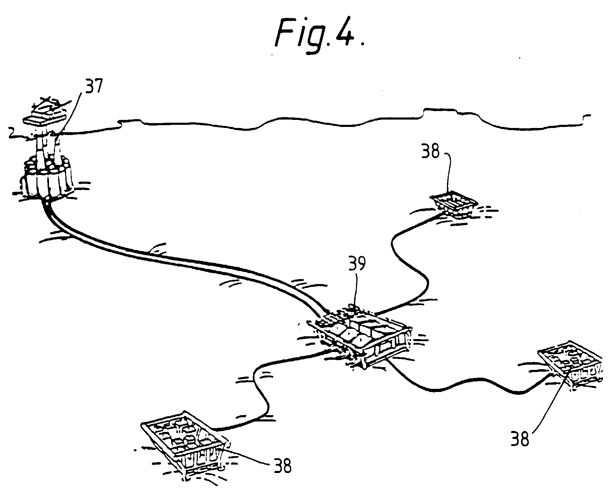

Fig. 4 illustrates an example of operation of a laminated pipe according to the invention between a host platform 37 and underwater installations, such as satellites 38, 39.

After production, the laminated pipe is spooled onto a drum and transported by a conventional laying vessel (cable laying vessel) to the installation site, connected to a oilproducing platform and laid in a predetermined route. If necessary the pipe can be dug into the seabed during laying. The other end of the laminated pipe is connected to a predetermined underwater installation (sub-sea template).

Sections of laminated pipes can be joined with metallic connections wherever necessary during installation. The metallic connections are adhered to the laminated pipe.

The laminated pipe can transport chemicals and/or water for injections into a transportline for oil through a Christmas tree. The chemicals will follow the oilflow in the flowline back to the host platform while water is injected into the well to enhance the oil recovery. The laminated pipe can also transport oil/fuel as a flowline.

The laminated pipe also has many applications on-shore. The pipe can be installed without digging in areas where there are low risks for physical damage or environmental influence. The pipe can if necessary be insulated with a fire-proof coating in areas with fire hazard.

In on-shore oil producing wells, the laminated pipe can be used for injection of water and transport of crude oil from the well to a storage site.

## Claims

1. A laminated pipe for offshore oil production comprising a thermoplastic inner tube coated with a laminate of matrix material comprising a plurality of layers of reinforcing fibres chosen from the group consisting of glass fibres, carbon fibres and polymeric fibres or combinations thereof, said matrix material being a thermosetting resin, wherein said inner thermoplastic tube (1) has been coated with a layer of longitudinal reinforcing fibres (2), a multidirectional mat (3), a layer of radial reinforcing fibres (4), a multidirectional reinforcing mat (5), longitudinal reinforcing fibres (6), a multidirectional mat (7) and radial reinforcing fibres (8) where all the layers are bound together by said thermosetting resin.

2. A method of producing a laminated pipe, wherein a thermoplastic tube (1) is provided for acting as a carrier for the subsequent formation of the laminate and, prior to said lamination, subjected to a tension in its axial direction that extends the tube corresponding to the thermal extension in an axial direction of a tension-free thermoplastic tube at the curing temperature, in such a way that the thermal extension of the thermoplastic tube during the curing process will be approximately nil, after which said tube (1) is coated in order with a layer of longitudinal reinforcing fibres (2), a multidirectional mat (3), a layer of radial reinforcing fibres (4), a multidirectional reinforcing mat (5), longitudinal reinforcing fibres (6), a multidirectional mat (7) and radial reinforcing fibres (8), the laminated pipe then being wrapped with two layers of cellophane tape and subsequently fed to a curing oven, all the layers being bound together by a thermosetting resin, the fibres being chosen from the group consisting of glass fibres, carbon fibres and polymeric fibres or combinations thereof.

3. The method according to claim 2, characterized in that the thermoplastic tube prior to lamination is subjected to the application of a ter-polymer by means of a cross-head extruder which forms a chemical bonding between the thermosetting resin and the thermoplastic tube.

4. The method of producing a laminated pipe according to claim 2 or 3, characterized in that said pipe is produced in continuous lengths with continuous application of reinforcing fibres, the pipe being bendable so as to be coiled up on a spool after production.

5. The utilization of a laminated pipe according to claim 1, wherein said pipe is used for the transport of chemicals or the transfer of hydraulic signals under water.

## Patentansprüche

1. Mehrschichtiges Rohr für die Offshore-Ölförderung mit einem thermoplastischen Innenrohr, das mit einem Schichtstoff aus Trägermaterial beschichtet ist, das eine Vielzahl von Schichten aus Verstärkungsfasern umfaßt, die aus der Glasfasern, Kohlefasern und polymere Fasern oder Kombinationen daraus umfassenden Gruppe gewählt sind, wobei das Trägermaterial ein wärmehärtbares Harz ist, bei dem das thermoplastische Innenrohr (1) mit einer Schicht aus längsgerichteten Verstärkungsfasern (2), einer mehrdimensionalen Matte (3), einer Schicht aus radialgerichteten Verstärkungsfasern (4), einer mehrdimensionalen Verstärkungsmatte (5), längsgerichteten Verstärkungsfasern (6), einer mehrdimensionalen Matte (7) und radialgerichteten Verstärkungsfasern (8) beschichtet worden ist und alle Schichten durch das wärmehärtbare Harz miteinander verbunden sind.

2. Verfahren zum Herstellen eines mehrschichtigen Rohres, bei dem ein thermoplastisches Rohr (1) als Träger für das anschließende Ausbilden des Schichtstoffes bereitgestellt und vor der Beschichtung einer Spannung in axialer Richtung ausgesetzt wird, wodurch das Rohr entsprechend der Wärmedehnung in axialer Richtung eines spannungsfreien thermoplastischen Rohres bei der Aushärttemperatur auf eine solche Weise gedehnt wird, daß die Wärmedehnung des thermoplastischen Rohres während des Aushärtprozesses etwa Null sein wird, wonach das Rohr (1) in der angegebenen Reihenfolge mit einer Schicht aus längsgerichteten Verstärkungsfasern (2), einer mehrdimensionalen Matte (3), einer Schicht aus radialgerichteten Verstärkungsfasern (4), einer mehrdimensionalen Verstärkungsmatte (5), längsgerichteten Verstärkungsfasern (6), einer mehrdimensionalen Matte (7) und radialgerichteten Verstärkungsfasern (8) beschichtet wird, das mehrschichtige Rohr dann mit zwei Schichten Zellophanband umwickelt und anschließend in einen Aushärteofen eingebracht wird, in dem alle Schichten durch das wärmehärtbare Harz miteinander verbunden werden, wobei die Fasern aus der Glasfasern, Kohlefasern und polymere Fasern oder Kombinationen daraus umfassenden Gruppe gewählt sind.

3. Verfahren nach Anspruch 2, dadurch gekennzeichnet, daß auf das thermoplastische Rohr vor der Beschichtung ein trimeres Polymer mittels eines Querkopf-Extruders aufgebracht wird, das eine chemische Verbindung zwischen dem wärmehärtbaren Harz und dem thermoplastischen Rohr herstellt.

4. Verfahren zum Herstellen eines mehrschichtigen Rohrs nach Anspruch 2 oder 3, dadurch gekennzeichnet, daß das Rohr in kontinuierlichen Längen unter kontinuierlichem Auftrag verstärkender Fasern hergestellt wird, wobei das Rohr biegsam ist, so daß es nach der Herstellung auf eine Trommel aufgewickelt werden kann.

5. Einsatz eines mehrschichtigen Rohrs nach Anspruch 1, bei dem das Rohr zum Transport von Chemikalien oder zum Übertragen hydraulischer Signale unter Wasser verwendet wird.

## Revendications

1. Un tuyau stratifié pour la production de pétrole en mer, comportant un tube intérieur thermoplastique revêtu d'un stratifié de matière de matrice comprenant une pluralité de couches de fibres de renforcement choisies dans le groupe constitué par les fibres de verre, les fibres de carbone et les fibres polymères, ou leurs combinaisons, ladite matière de matrice étant une résine thermodurcissable, dans lequel ledit tube intérieur thermoplastique (1) a été revêtu d'une couche de fibres de renforcement longitudinal (2), d'un matelas multidirectionnel (3), d'une couche de fibres de renforcement radial (4) , d'un matelas de renforcement multidirectionnel (5), de fibres de renforcement longitudinal (6), d'un matelas multidirectionnel (7) et de fibres de renforcement radial (8), toutes les couches étant liées ensemble par ladite résine thermodurcissable.

2. Un procédé de production d'un tuyau stratifié, dans lequel
un tube thermoplastique (1) est prévu pour agir comme support pour la formation subséquente du stratifié et, avant ladite stratification, soumis à une traction dans sa direction axiale, qui allonge le tube en correspondance à l'allongement thermique dans la direction axiale d'un tube thermoplastique sans traction à la température de durcissement, de telle manière que l'allongement thermique du tube thermoplastique lors du processus de durcissement soit approximativement nul, après quoi ledit tube (1) est revêtu, dans l'ordre, d'une couche de fibres de renforcement longitudinal (2), d'un matelas multidirectionnel (3), de fibres de renforcement radial (4) , d'un matelas de renforcement multidirectionnel (5), de fibres de renforcement longitudinal (6), d'un matelas multidirectionnel (7) et de fibres de renforcement radial (8), le tuyau stratifié étant ensuite enveloppé de deux couches de bande cellophane et délivré ensuite à un four de durcissement, toutes les couches étant liées ensemble par une résine thermodurcissable, les fibres étant choisies dans le groupe constitué par les fibres de verre, les fibres de carbone et les fibres polymères , ou leurs combinaisons.

3. Le procédé selon la revendication 2, caractérisé en ce que le tube thermoplastique, avant la stratification, est soumis à l'application d'un terpolymère au moyen d'une extrudeuse à tête transversale qui forme une liaison chimique entre la résine thermodurcissable et le tube thermoplastique.

4. Le procédé de production d'un tuyau stratifié selon la revendication 2 ou 3, caractérisé en ce que ledit tuyau est produit en longueurs continues avec application continue de fibres de renforcement, le tuyau pouvant être fléchi de manière à être enroulé sur une bobine après production.

5. L'utilisation d'un tuyau stratifié selon la revendication 1, dans laquelle ledit tuyau est utilisé pour le transport de produits chimiques ou le transfert de signaux hydrauliques sous l'eau.
